# NOUVEAU FASCICULE DE BREVET EUROPEEN

(11) **EP 2 338 030 B2**
(45) Date de publication et mention de la décision concernant l'opposition: **12.06.2019**
(45) Mention de la délivrance du brevet: 22.06.2016
(21) Numéro de dépôt: 09748369.7
(22) Date de dépôt: 28.09.2009
(51) Int. Cl.: G01D 5/14

(54) **CAPTEUR DE POSITION MAGNETIQUE A MESURE DE DIRECTION DE CHAMP ET A COLLECTEUR DE FLUX**
MAGNETPOSITIONSSENSOR MIT FELDRICHTUNGSMESSUNG UND FLUSSKOLLEKTOR
MAGNETIC POSITION SENSOR WITH FIELD DIRECTION MEASUREMENT AND FLUX COLLECTOR

(30) Priorité: 24.10.2008 FR 0805953
(43) Date de publication de la demande: 29.06.2011
(73) Titulaire: Moving Magnet Technologies (MMT), 25000 Besançon (FR)
(72) Inventeur: FRACHON Didier, F-25000 Besançon (FR); MASSON Gérald, F-25000 Besançon (FR); BIWERSI Stéphane, F-25140 Frambouhans (FR)
(74) Mandataire: IP Trust
(86) Numéro de dépôt international: PCT/FR2009/001151
(87) Numéro de publication internationale: WO 2010/046550

(56) Documents cités:
- WO-A1-2007/057563
- WO-A1-2007/099238
- FR-A- 2 893 410
- US-A- 5 164 668
- US-A- 5 942 895
- US-A- 5 942 895
- US-A1- 2002 179 825
- US-A1- 2005 253 578
- US-A1- 2006 208 727

## Description

### DOMAINE TECHNIQUE DE L'INVENTION

La présente invention concerne le domaine des capteurs magnétiques analogiques sans contact de position rotatif et linéaire.

Les capteurs analogiques qui détectent la position à partir de la direction d'un champ magnétique ont de nombreux avantages :
- pas de contact mécanique avec la partie mobile, et donc pas d'usure,
- insensibilité à la saleté,
- coût de production réduit,
- longue durée de vie,
- insensibilité à la température.
- Sensibilité réduite aux tolérances géométriques et de positionnement de l'aimant permanent

Par exemple, les capteurs de position sans contact qui mesurent la position par l'intermédiaire de la direction du champ magnétique sont insensibles à l'effet de la température sur les propriétés magnétiques des aimants permanents à l'inverse des capteurs qui mesurent la position par la mesure de l'amplitude d'une seule composante du champ magnétique. La mesure de la direction d'un champ magnétique est réalisée à l'aide du rapport d'au moins deux composantes du champ magnétique qui évoluent de la même façon en température. Dès lors, le calcul du rapport permet de s'affranchir de la variation due à la température.

### ETAT DE LA TECHNIQUE ANTERIEURE

Dans le domaine des capteurs rotatifs qui mesurent la direction du champ magnétique il existe des capteurs rotatifs qui utilisent un aimant permanent au bout d'un arbre en rotation dont on souhaite mesurer la position et au moins deux éléments magnéto-sensibles qui mesurent la direction du champ magnétique sur l'axe de rotation de l'arbre en mouvement.

Cependant, ces dispositifs ont des limites notamment lorsqu'il s'agit de mesurer le déplacement rotatif d'un arbre passant au travers du capteur lui-même car, dans ce cas, il est impossible de placer les éléments magnéto-sensibles sur l'axe de rotation du système. Dans le cas des capteurs linéaires, il existe des structures qui utilisent un aimant disque aimanté axialement et au moins deux éléments magnéto-sensibles qui mesurent la direction du champ magnétique mais ces capteurs sont limités à des courses linéaires assez faibles de l'ordre de 20 mm car l'amplitude des deux composantes utilisées pour la mesure de la direction du champ devient trop faible lorsque la course à mesurer augmente.

On connaît dans l'état de l'art le brevet FR2893410 de la demanderesse, qui utilise deux composantes de l'induction magnétique, générée par un aimant bague aimanté sensiblement diamétralement, mesurées en un seul et même endroit situé proche du plan médian de l'aimant. Un calcul de l'arctangente du rapport des deux composantes d'induction (composante radiale et tangentielle) permet de déduire la position angulaire de l'aimant. Il est cependant nécessaire d'appliquer au préalable un facteur de correction entre ces deux composantes, en effet dans ce capteur, l'amplitude des deux composantes de l'induction magnétique est sensiblement différente.

Ce rapport varie typiquement dans la gamme de 1.5 à 4 mais plus le diamètre de l'aimant est grand plus ce rapport augmente. L'augmentation du rapport est principalement due à la diminution de la composante tangentielle. Pour les aimants de grand diamètre, l'amplitude de la composante tangentielle est telle qu'elle devient incompatible avec les éléments magnéto-sensibles classiquement utilisés pour ce type de capteur et donc la mesure de la position angulaire de l'aimant n'est plus assurée de façon satisfaisante. La faible amplitude de la composante tangentielle rend également le capteur sensible aux perturbations magnétiques qui peuvent être appliquées au capteur.

Ce facteur de correction peut également induire des problèmes de précision dans la mesure et plus ce facteur est important et plus l'erreur sera élevée. De plus, la nécessité d'avoir un rapport d'amplification entre les deux composantes avant le calcul de la position (arctangente) conduit à une incompatibilité de ces systèmes avec certains types d'éléments magnéto-sensibles (ex. : magnétorésistance).

De plus, il existe des solutions de comptage de tour, pour des applications de capteur d'angle volant, à base de magnétorésistances comme par exemple décrit dans le brevet EP1532425B1 qui nécessite que le rapport entre les composantes soit inférieur à 1.5 et que les amplitudes des deux composantes soient proches de 200 G.

On connaît également dans l'état de la technique le brevet US0208727 illustré par la figure 1 a. Ce document décrit un capteur de position rotative sur 360° et qui utilise deux sondes magnéto-sensibles A4, A5 décalées angulairement de 90° et 4 pièces ferromagnétiques A10 afin de déterminer la position angulaire d'un aimant A2 disque aimanté sensiblement diamétralement. Les 2 éléments magnéto-sensibles A4, A5, sensibles à l'amplitude de l'induction magnétique générée par l'aimant A2, sont positionnés dans les 2 entrefers définis par les 4 pièces ferromagnétiques A10 qui permettent d'égaliser les amplitudes des composantes du champ magnétique. Dans cette structure, le volume des pièces ferromagnétiques est très important et la construction d'un tel capteur est difficile car elle nécessite un positionnement précis de ces pièces ferromagnétiques A10. Cela induit un coût de fabrication important.

Il est également connu de l'état de la technique, les documents de brevet n° US 2002/0179825 et US 5, 942, 895 décrivant respectivement un capteur magnétique de position angulaire et un capteur magnétique doté de concentrateurs agencés pour limiter la mesure à l'une des composantes du champ magnétique mesuré. Toutefois, l'enseignement de ces documents ne permet ni de réaliser une détection de position fiable à partir d'un aimant à direction d'aimantation continûment variable selon sa direction de déplacement, ni même de répondre aux problèmes techniques préalablement évoqués. Le document de brevet US 5,164,668 enseigne une réalisation d'un capteur où l'élément de détection est placé dans l'entrefer.

### EXPOSE DE L'INVENTION

La présente invention se propose de résoudre tout ou partie des problèmes mentionnés ci-dessus en mesurant deux composantes d'induction magnétique en un seul et même point et en harmonisant l'amplitude des deux composantes de l'induction magnétique, à l'aide de collecteurs de flux, afin d'avoir un rapport d'amplitude entre ces deux composantes de l'induction magnétique proche de 1. Un tel rapport d'amplitude permet d'utiliser un plus grand choix d'éléments magnéto-sensibles (sonde à effet Hall, AMR...).

Dans une première configuration, le capteur comprend un aimant bague aimanté sensiblement diamétralement, un élément de détection capable de mesurer deux composantes de l'induction magnétique en un seul et même point et deux collecteurs de flux positionnés sur la périphérie extérieure de l'aimant. Les deux composantes de l'induction magnétique sont mesurées dans un plan décalé axialement par rapport à la face inférieure des collecteurs. Les collecteurs de flux peuvent être directement surmoulés dans le boîtier du capteur.

Dans une autre configuration, les collecteurs de flux sont pliés et sont directement fixés sur le circuit imprimé supportant les éléments de détection.

Selon une autre variante, les collecteurs seront associés à des capteurs magnétiques sans contact de position linéaire ou angulaire tels que décrit dans la demande de brevet FR2898189 de la demanderesse, dont le contenu est inclus par référence.

Les variantes décrites ne sont pas limitatives. Par exemple, les collecteurs peuvent être associés à un système magnétique sans contact de comptage de tours absolu.

A ce titre, l'invention concerne un capteur de position sans contact conforme à la revendication 1.

Il est bien que connu que chaque aimant permanent présente une aimantation dont la direction est définie par un vecteur d'aimantation. Ce vecteur d'aimantation définit la direction du champ magnétique à l'intérieur de l'aimant. Cette direction dépend de la façon dont l'aimant est polarisé lors de sa réalisation. Par exemple, un aimant non polarisé en forme de « bague » placé dans un champ magnétique unidirectionnel homogène suffisant aura sa direction d'aimantation orientée selon la direction de ce champ magnétique. Dans le cas où le champ magnétique est orienté suivant une direction perpendiculaire à l'axe de rotation de l'aimant (on parle alors d'une aimantation de type diamétrale) et si cet aimant se déplace en rotation autour de son axe, la direction d'aimantation vu en un point fixe de l'espace à l'intérieur de l'aimant va donc être continûment variable suivant une fonction linéaire.

De préférence, la direction d'aimantation de l'aimant permanent varie de façon linéaire. C'est le cas lorsque la direction d'aimantation évolue de façon proportionnelle au déplacement de l'aimant.

Avantageusement, la direction d'aimantation de l'aimant permanent varie de façon périodique. C'est le cas lorsque la direction d'aimantation reprend la même valeur lorsque l'aimant se déplace d'une distance prédéterminée.

De préférence, l'aimant permanent est sensiblement cylindrique.

Avantageusement, l'aimant permanent est sensiblement parallélépipédique.

De préférence, les collecteurs de flux présentent également une portion de pliure.

Avantageusement, le capteur magnétique comporte deux couples de collecteur, chaque couple de collecteur définissant un entrefer, l'élément de détection étant positionné à équidistance des quatre extrémités des collecteurs définissant lesdits entrefers.

De préférence, l'élément de détection est apte à compter de manière absolue le nombre de tours de l'aimant.

Selon un mode de réalisation avantageux, le capteur comporte au moins un second élément de détection apte à mesurer la position angulaire de l'aimant sur 360°.

De préférence, le second élément de détection est associé à au moins un couple de détecteur de flux. Chaque collecteur de flux présente au moins une portion, dotée d'une extrémité, s'étendant sensiblement suivant la direction de déplacement de l'aimant. Les extrémités du couple de collecteurs de flux définissent un entrefer orienté suivant la direction de déplacement de l'aimant. L'élément de détection est positionné à l'extérieur dudit entrefer et sensiblement à équidistance des extrémités.

Avantageusement, les éléments de détection sont positionnés de part et d'autre d'un circuit imprimé.

De préférence, les éléments de détection sont coplanaires.

Avantageusement, un élément de blindage magnétique est disposé au voisinage d'au moins un des éléments de détection.

### BREVE DESCRIPTION DES FIGURES

D'autres caractéristiques et avantages de l'invention ressortiront à la lecture qui suit d'exemples de réalisation détaillés, en référence aux figures qui représentent respectivement :
- La figure 1a, une vue en coupe d'un capteur rotatif appartenant à l'état de la technique ;
- La figure 1b, un diagramme représentant les composantes radiale et tangentielle de l'induction magnétique mesurées par un dispositif de l'art antérieur en un point situé en périphérie extérieure d'un aimant bague aimanté diamétralement ;
- La figure 2, une vue en perspective d'un exemple de réalisation d'un capteur magnétique présentant deux collecteurs de flux selon l'invention ;
- La figure 3, une vue en perspective d'un exemple de réalisation d'un capteur magnétique selon l'invention présentant deux éléments de détection dans deux boîtiers distincts ;
- La figure 4, un diagramme représentant les composantes radiale et tangentielle de l'induction magnétique mesurée, par un capteur selon l'invention présentant deux collecteurs de flux situés autour de l'aimant permanent, en un point situé en périphérie extérieure d'un aimant bague aimanté diamétralement ;
- La figure 5, une vue en perspective d'un exemple de réalisation d'un capteur magnétique selon l'invention présentant des collecteurs pliés.
- La figure 6, une vue en perspective d'un exemple de réalisation d'un capteur magnétique selon l'invention présentant des collecteurs pliés suivant deux directions.
- La figure 7, une vue en perspective d'un exemple de réalisation d'un capteur magnétique selon l'invention présentant deux collecteurs de flux et une sonde positionnée parallèlement à la face extérieure de l'aimant.
- La figure 8, une vue en perspective d'un exemple de réalisation d'un capteur magnétique selon l'invention présentant quatre collecteurs de flux.
- La figure 9, une vue en perspective d'un premier exemple de réalisation d'un capteur magnétique linéaire grande course selon l'invention présentant deux collecteurs.
- La figure 10, une vue en perspective d'un deuxième exemple de réalisation d'un capteur magnétique linéaire grande course selon l'invention présentant deux collecteurs.
- La figure 11a, un diagramme représentant la direction d'aimantation de l'aimant bague pour une configuration de capteur rotatif selon la présente invention appliquée à la mesure d'une grande course angulaire.
- La figure 11b, un diagramme représentant la direction d'aimantation d'un aimant tuile pour une configuration de capteur rotatif selon la présente invention appliquée à la mesure d'une petite course angulaire.
- La figure 11c, un diagramme représentant la direction d'aimantation d'un aimant tuile pour une autre configuration de capteur rotatif selon la présente invention appliquée à la mesure d'une petite course angulaire.
- La figure 12, une vue en perspective un exemple de réalisation d'une structure selon la présente invention intégrant la mesure de l'angle d'un aimant bague sur 360° ainsi qu'un dispositif de comptage du nombre de tours de l'aimant permanent avec 2 collecteurs et deux composants de part et d'autre d'un circuit imprimé.
- La figure 13a, un diagramme représentant les composantes radiale et tangentielle de l'induction magnétique mesurée au voisinage de l'aimant permanent en deux positions différentes du capteur illustré par la figure 13.
- La figure 13b, un diagramme représentant les signaux de sortie des deux éléments de détection du capteur de la figure 12.
- La figure 14, une vue en perspective un exemple de réalisation d'une structure selon la présente invention intégrant la mesure de l'angle d'un aimant bague sur 360° ainsi qu'un dispositif de comptage du nombre de tours de l'aimant permanent avec 2 collecteurs et deux composants disposé sur la même face d'un circuit imprimé.
- La figure 15, une vue en perspective un exemple de réalisation d'une structure de capteur rotatif selon la présente invention intégrant la mesure de l'angle d'un aimant bague sur 360° associé à 2 collecteurs ainsi qu'un dispositif de comptage du nombre de tour de l'aimant permanent associé à 2 collecteurs.
- La figure 16, une vue en perspective un exemple de réalisation d'une structure de capteur rotatif suivant la présente invention qui utilise un aimant disque présentant une direction d'aimantation continûment variable suivant la direction de déplacement.
- La figure 17, une vue en perspective un exemple de réalisation d'une structure de capteur rotatif avec 2 collecteurs et un blindage pour limiter l'influence des perturbations magnétiques extérieures.
- La figure 18, une vue en perspective un exemple de réalisation d'une structure selon la présente invention avec deux collecteurs de flux, un élément de détection et un aimant multipolaire dont l'aimantation est périodique sur un tour et présente plusieurs périodes.

### DESCRIPTION DETAILLEE D'UN MODE DE REALISATION

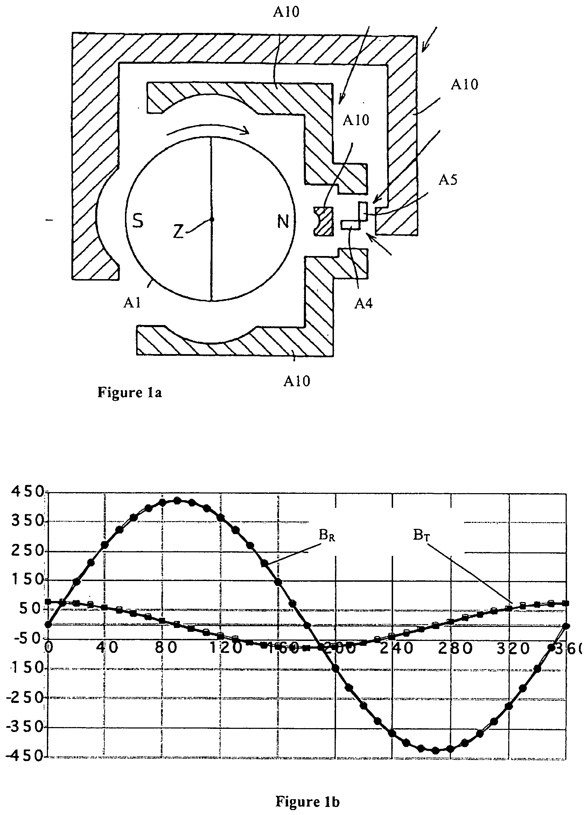

La figure 1a représente une structure de capteur rotatif selon l'art antérieur. Le flux magnétique généré par un aimant A1 permanent aimanté sensiblement diamétralement est collecté en périphérie de celui-ci par 4 pièces ferromagnétiques A10 qui forment deux entrefers de mesure. Dans ces deux entrefers de mesures, deux éléments de détection A4, A5 mesurent deux composantes de l'induction magnétique suivant deux axes orthogonaux.

La figure 1b représente deux composantes, radiale B_{R} et tangentielle B_{T}, de l'induction magnétique mesurées par un dispositif de l'art antérieur en périphérie extérieure d'un aimant bague aimanté sensiblement diamétralement. Le calcul de la position est alors fait après amplification de la composante tangentielle et un calcul d'arctangente du rapport des deux composantes d'induction magnétique.

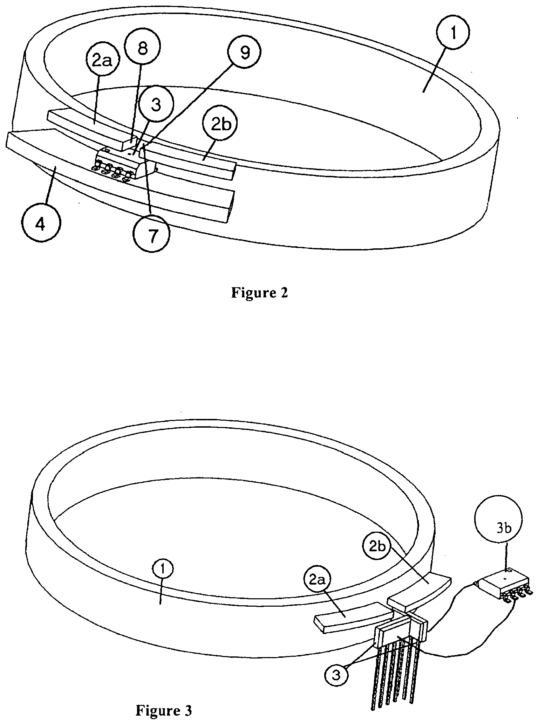

La figure 2 représente une structure du capteur rotatif selon la présente invention. Deux collecteurs de flux 2a et 2b sont placés en périphérie d'un aimant bague 1 aimanté sensiblement diamétralement. Ces collecteurs forment un entrefer 7 défini par deux de leurs extrémités 8 et 9. La mesure de l'induction suivant deux directions est réalisée en un seul et même point par un élément de détection 3 positionné sur un PCB 4 et situé dans un plan décalé par rapport à la surface inférieure des collecteurs de flux 2a et 2b et donc hors de l'entrefer 7. Le calcul de la position angulaire de l'aimant est fait par le calcul de l'arctangente du rapport des deux composantes d'induction après éventuellement une formalisation des composantes.

La figure 3 illustre une configuration de capteur rotatif pour grande course selon la présente invention avec un aimant bague 1, deux collecteurs de flux 2a et 2b situés à proximité de la périphérie de l'aimant permanent et deux élément de détection 3 dans deux boîtiers distincts mesurant chacun une composante du champ magnétique. Dans une telle configuration, le calcul de l'angle à l'aide des deux composantes du champ magnétique doit être réalisé à l'aide d'un composant externe 3b.

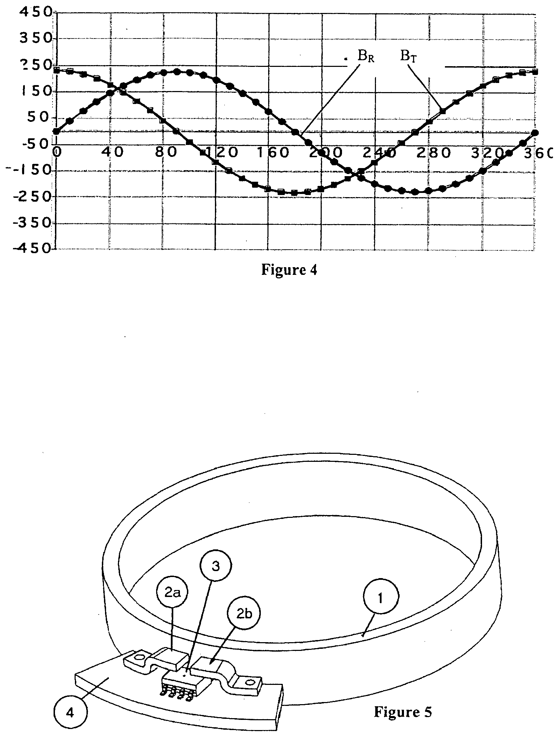

La figure 4 est un diagramme représentant les composantes radiale B_{R} et tangentielle B_{T} de l'induction magnétique mesurées en un seul et même point en fonction de l'angle de rotation de l'aimant 10 du dispositif de la figure 3. Il apparaît à la lumière de ce diagramme que les composantes radiale B_{R} et tangentielle B_{T} de l'induction tangentielle mesurée présentent une amplitude sensiblement égale.

La figure 5 représente un mode de réalisation d'un capteur rotatif suivant la présente invention avec un aimant permanent 1 aimanté sensiblement diamétralement et deux collecteurs de flux 2a et 2b pliés pour être directement fixés sur le PCB 4 supportant l'élément de détection 3.

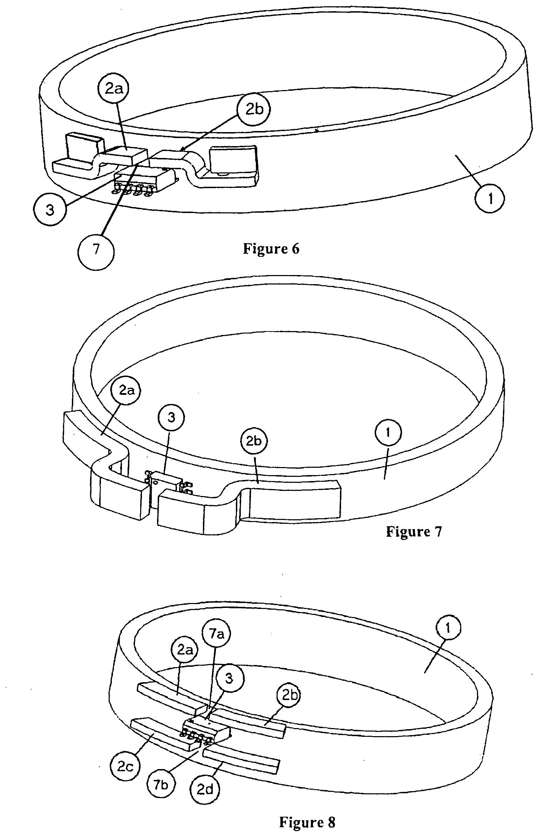

La figure 6 représente un mode de réalisation d'un capteur rotatif suivant la présente invention avec un aimant permanent 1 aimanté sensiblement diamétralement et deux collecteurs de flux 2a et 2b pliés pour être directement fixés sur le PCB non représenté supportant l'élément de détection 3 et pliés également pour augmenter la surface de collection du flux en face de la face extérieure de l'aimant permanent. En augmentant la surface de collection, l augmente la composante tangentielle du champ magnétique au niveau de l'élément de détection.

La figure 7 représente une configuration de la présente invention dans laquelle de l'élément de détection 3 est contenu dans un boîtier placé parallèlement à la surface extérieure d'un aimant bague 1. Les collecteurs de flux 2a et 2b sont placés de façon à ramener le flux tangentiel généré par l'aimant au niveau de l'élément de détection.

La figure 8 représente un capteur suivant la présente invention avec un aimant bague 1 aimanté sensiblement diamétralement et 4 collecteurs de flux 2a, 2b, 2c et 2d. Ces quatre collecteurs de flux définissent deux à deux, deux entrefers 7a et 7b qui sont placés de part et d'autre de l'élément de détection 3.

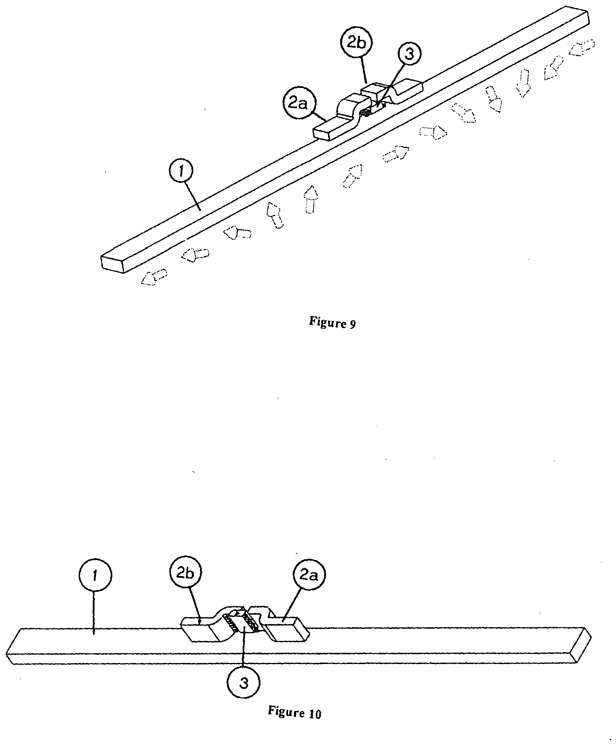

La figure 9 représente une variante linéaire du capteur suivant la présente invention avec un aimant 1 sous la forme d'une bande présentant une direction d'aimantation variant linéairement le long de l'aimant 1 et deux collecteurs de flux 2a et 2b positionnés de part et d'autre de l'élément de détection 3. Les flancs des collecteurs 2a et 2b sont parallèles aux flancs de l'aimant 1 permanent. L'élément de détection 3 mesure la composante longitudinale et la composante perpendiculaire à l'aimant 1. Sur cette même figure, la direction d'aimantation à été représentée, la direction d'aimantation est continûment variable suivant la direction de déplacement de l'aimant.

La figure 10 représente une seconde variante linéaire du capteur suivant la présente invention avec un aimant 1 sous la forme d'une bande présentant une direction d'aimantation variant linéairement le long de l'aimant et deux collecteurs de flux 2a et 2b positionnés de part et d'autre de l'élément de détection 3. Les flancs des collecteurs 2a et 2b sont perpendiculaires aux flancs de l'aimant permanent 1. L'élément de détection 3 mesure la composante longitudinale et la composante perpendiculaire à l'aimant 1.

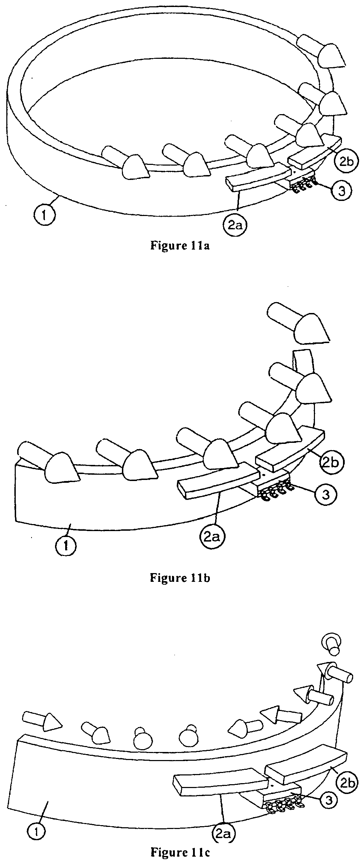

La figure 11 a représente un capteur rotatif pour des applications grandes courses course angulaire à mesurer, c'est-à-dire proche de 360°, suivant la présente invention avec une représentation de la direction d'aimantation qui varie de façon continue sur les 360° de l'aimant bague 1. La rotation de l'angle d'aimantation le long de périphérie de l'aimant est de 360° sur l'intégralité de la périphérie de l'aimant bague.

La figure 11b représente un capteur rotatif pour des applications de mesure angulaire sur une course limitée, c'est-à-dire très inférieure à 360°, suivant la présente invention. La largeur angulaire de l'aimant 1 est ajustée à la course utile à mesurer afin de réduire au minimum le volume d'aimant nécessaire. La direction d'aimantation est représenté sur le secteur d'aimant considéré pour la course utile du capteur. La rotation de l'angle d'aimantation le long de la périphérie de l'aimant 1 est sensiblement égale à la largeur angulaire de l'aimant 1 considéré pour la course à mesurer.

La figure 11c représente un capteur rotatif pour des applications de mesure angulaire sur une course limitée très inférieure à 360° suivant la présente invention. La direction d'aimantation est également représentée et varie de 360° sur l'intégralité de la périphérie de l'aimant bague 1.

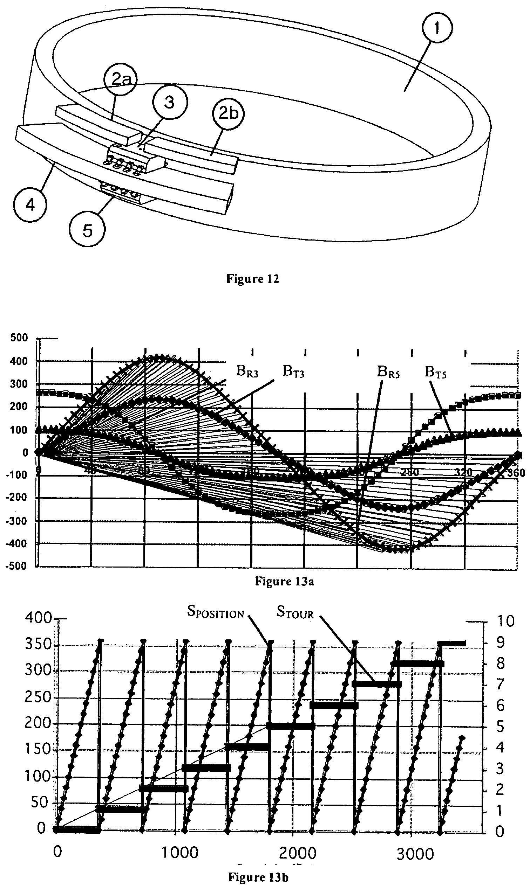

La figure 12 représente une variante d'un capteur rotatif selon la présente invention pour des applications de mesure angulaire sur une course supérieure à 360° rotation de l'élément à mesurer sur plusieurs tours. Le dispositif comprend un aimant bague 1 aimanté sensiblement diamétralement, deux collecteurs de flux 2a et 2b et un élément de détection 3 capable de mesurer de façon absolue le nombre de tours fait par l'aimant. L'élément de détection 3 est positionné à proximité d'une des extrémités des collecteurs de flux 2a et 2b. Cet élément de détection 3 est placé sur la partie supérieure d'un PCB 4 lui servant de support. Un second élément de détection 5 mesurant les composantes radiale et tangentielle de l'induction magnétique générée par l'aimant permanent est placé sous ce même PCB 4. Le second élément de détection 5 permet de connaître la position angulaire de l'aimant 1 permanent sur une course proche de 360°. Une telle configuration permet de minimiser la surface de PCB 4 nécessaire à l'implantation des deux éléments de détection 3, 5, mais il est possible de placer le second élément de détection 5 sur le même côté du PCB 4 mais décalé angulairement par rapport au premier élément de détection 3.

La figure 13a représente les composantes radiale et tangentielle de l'induction magnétique mesurée au niveau des éléments de détection 3 et 5 de la structure représentée en figure 12. Au niveau de l'élément de détection 3 qui se trouve à proximité de l'extrémité des collecteurs de flux 2a et 2b, les composantes radiale B_{R3} et tangentielle B_{T3} de l'induction magnétique ont des amplitudes sensiblement égales. En revanche, au niveau de l'élément de détection 5 le rapport d'amplitude entre les composantes radiale B_{R5} et tangentielle B_{T5} de l'induction magnétique est proche de 4.

Ce rapport d'amplitude au niveau du composant qui permet de connaître la position angulaire de l'aimant sur 360° peut être compensé électroniquement non sans une légère diminution des performances du capteur.

La figure 13b représente les signaux de position angulaire fournit par l'élément de détection 5 du capteur de la figure 12. Le premier signal S_{POSITION} est linéaire, ce qui donne la position angulaire de l'aimant sur 360°, et périodique de période 360°. Le second signal S_{TOUR} fournit par l'élément de détection 3, permet de connaître de façon absolue le nombre de tour réalisé par l'aimant 1 et se présente donc sous une forme de « marche d'escalier » qui s'incrémente à chaque passage d'un tour supplémentaire.

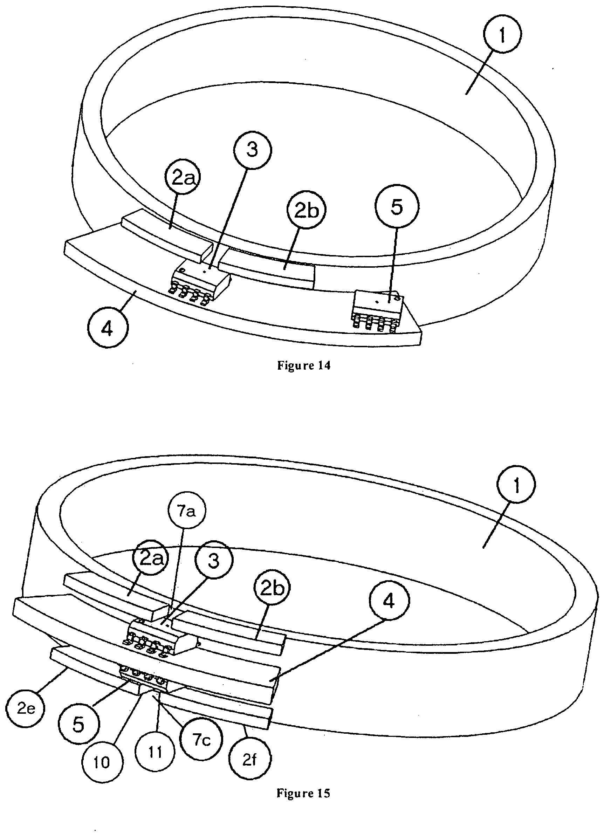

La figure 14 représente une variante du capteur représenté à figure 12. Ce capteur associe deux éléments de détection 3 et 5, respectivement pour connaître le nombre tour réalisé par l'aimant permanent et pour connaître la position angulaire de l'aimant sur 360°. L'élément de détection 3 est associé à deux collecteurs de flux 2a et 2b dans le but de compenser l'écart d'amplitude des composantes radiale et tangentielle. Dans la configuration décrite dans cette figure, les éléments de détection 3 et 5 sont placés du même côté d'un circuit imprimé 4.

La figure 15 représente une structure de capteur similaire à la structure représentée en figure 12 excepté le fait que les collecteurs de flux 2a, 2b, 2e et 2f sont aux nombres de 4, 2 2a et 2b étant associés à l'élément de détection 3 qui compte le nombre de tour de l'aimant permanent et 2 2e et 2f associés à l'élément de détection 5 qui mesure la position angulaire de l'aimant permanent sur une rotation proche de 360°. L'association de deux collecteurs 2e et 2f à l'élément de détection 5 permet de minimiser le rapport d'amplitude entre les composantes radiale et tangentielle mesurées au niveau de l'élément de détection 5.

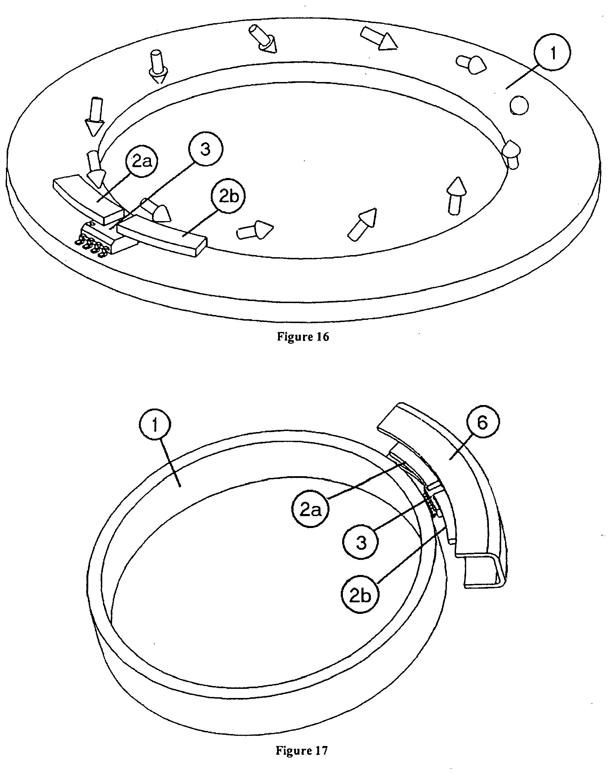

La figure 16 représente une variante de capteur rotatif selon la présente invention utilisant un aimant disque 1. Nous représentons la variation de la direction d'aimantation dans l'aimant 1. Un élément de détection 3 capable de mesurer les composantes axiale et tangentielle de l'induction magnétique est positionné au-dessus de l'aimant 1 et à proximité de l'entrefer généré entre les deux collecteurs de flux 2a et 2b.

La figure 17 représente un capteur rotatif selon la présente invention avec un aimant permanent 1, deux collecteurs de flux 2a et 2b et un élément de détection 3 capable de mesurer les composantes radiale et tangentielle sensiblement en un seul et même point. Un blindage 6 réalisé en matériau ferromagnétique est positionné autour de l'élément de détection 3 et des collecteurs de flux 2a et 2b afin de diminuer l'influence d'un champ extérieur perturbateur.

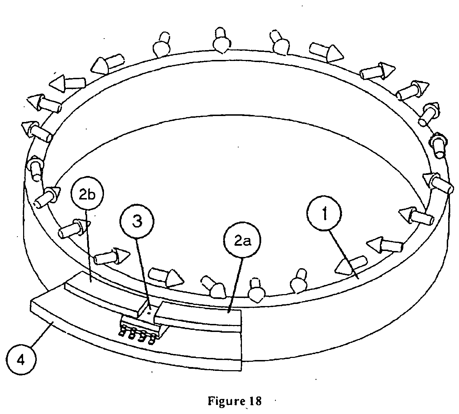

La figure 18 représente un capteur selon la présente invention. La structure comporte un aimant permanent 1 aimanté suivant une fonction continûment variable sur un angle de 120° et dont le motif est répété 3 fois sur l'aimant bague complet. L'induction magnétique est mesurée à proximité de l'aimant et à proximité de l'extrémité de 2 collecteurs de flux 2a et 2b à l'aide de l'élément de détection 3. Le signal sur un tour complet de l'aimant est périodique et de période identique à celle l'aimantation de l'aimant permanent. Une telle aimantation permet d'améliorer la résolution du signal sur la période du motif d'aimantation, l'association à un dispositif de comptage de période permet de mesurer la position angulaire de l'aimant sur plusieurs tours avec une résolution accrue.

## Revendications

1. Capteur de position sans contact comportant au moins un aimant permanent (1) émettant un champ magnétique, au moins un élément de détection (3) sensible à la direction du champ magnétique et au moins un couple de collecteurs de flux (2a, 2b), l'aimant permanent (1) étant apte à se mouvoir selon une direction de déplacement et présentant une direction d'aimantation continûment variable suivant la direction de déplacement, chaque collecteur de flux (2a, 2b) présentant au moins une portion, dotée d'une extrémité (8, 9), s'étendant sensiblement suivant la direction de déplacement de l'aimant (1), les extrémités (8, 9) d'un couple de collecteurs de flux (2a, 2b) définissant un entrefer (7) orienté suivant la direction de déplacement de l'aimant (1)
**caractérisé en ce que** l'élément de détection (3) est un élément de détection capable de mesurer deux composantes radiale BR et tangentielle BT de l'induction magnétique en un seul et même point positionné à l'extérieur dudit entrefer (7) en une position et sensiblement à équidistance des extrémités (8) et (9).

2. Capteur magnétique de position sans contact selon la revendication 1, **caractérisé en ce que** ledit élément de détection (3) est situé dans un plan décalé axialement par rapport à la surface inférieure des collecteurs de flux (2a et 2b).

3. Capteur magnétique de position sans contact selon la revendication 1, **caractérisé en ce que** la direction d'aimantation de l'aimant permanent (1) varie de façon linéaire.

4. Capteur magnétique de position sans contact selon la revendication 1, **caractérisé en ce que** la direction d'aimantation de l'aimant permanent (1) varie de façon périodique.

5. Capteur magnétique de position sans contact selon la revendication 1, **caractérisé en ce que** l'aimant permanent (1) est sensiblement cylindrique.

6. Capteur magnétique de position sans contact selon la revendication 1, **caractérisé en ce que** l'aimant permanent (1) est sensiblement parallélépipédique.

7. Capteur magnétique de position sans contact selon la revendication 1, **caractérisé en ce que** les collecteurs de flux (2a, 2b) présentent également une portion de pliure.

8. Capteur magnétique de position sans contact selon la revendication 1, **caractérisé en ce qu'**il comporte deux couples de collecteurs (2a, 2b et 2c, 2d), chaque couple de collecteur (2a, 2b et 2c, 2d) définissant un entrefer respectivement (7a, et 7b), l'élément de détection (3) étant positionné à équidistance des quatre extrémités des collecteurs (2a, 2b et 2c, 2d) définissant lesdits entrefers (7a, et 7b).

9. Capteur magnétique de position angulaire sans contact selon l'une des revendications 1 à 7, **caractérisé en ce que** l'élément de détection (3) est apte à compter de manière absolue le nombre de tours de l'aimant.

10. Capteur magnétique de position angulaire sans contact comportant un capteur selon la revendication précédente, **caractérisé en ce qu'**il comporte au moins un second élément de détection (5) apte à mesurer la position angulaire de l'aimant (1) sur 360°.

11. Capteur magnétique de position angulaire sans contact selon la revendication 10, dans lequel le second élément de détection (5) est associé à au moins un couple de détecteurs de flux (2e, 2f, **caractérisé en ce que**
- chaque collecteur de flux (2e, 2f) présente au moins une portion, dotée d'une extrémité (10, 11), s'étendant sensiblement suivant la direction de déplacement de l'aimant (1),
- les extrémités (10, 11) du couple de collecteurs de flux (2e, 2f) définissent un entrefer (7c) orienté suivant la direction de déplacement de l'aimant (1) ;
- et l'élément de détection (3) est positionné à l'extérieur dudit entrefer (7c) et sensiblement à équidistance des extrémités (10, 11).

12. Capteur magnétique de position angulaire sans contact selon la revendication 10 ou 11, **caractérisé en ce que** les éléments de détection sont positionnés de part et d'autre d'un circuit imprimé (4)

13. Capteur magnétique de position angulaire sans contact selon la revendication 11, **caractérisé en ce que** les éléments de détection (3 et 5) sont coplanaires.

## Patentansprüche

1. Kontaktloser Positionssensor, der mindestens einen Dauermagneten (1) umfasst, welcher ein magnetisches Feld emittiert, mindestens ein Detektionselement (3), das für die Richtung des Magnetfelds empfindlich ist, und mindestens ein Paar Flusskollektoren (2a, 2b), wobei der Dauermagnet (1) in der Lage ist, sich in eine Verschiebungsrichtung zu bewegen und eine Magnetisierungsrichtung aufweist, die in Verschiebungsrichtung kontinuierlich veränderlich ist, wobei jeder Flusskollektor (2a, 2b) mindestens einen, mit einem Ende (8, 9) versehenen Abschnitt aufweist, der sich im Wesentlichen entlang der Verschiebungsrichtung des Magneten (1) erstreckt, wobei die Enden (8, 9) eines Flusskollektorenpaares (2a, 2b) einen Spalt (7) abgrenzen, der entlang der Verschiebungsrichtung des Magneten (1) ausgerichtet ist, **dadurch gekennzeichnet, dass** das Detektionselement (3) in der Lage ist, zwei Komponenten der magnetischen Induktion, eine radiale Komponente BR und eine tangentiale Komponente BT, an ein und demselben Punkt außerhalb des besagten Spalts (7) in einer Position zu messen, die im Wesentlichen die gleiche Entfernung zu den Enden (8) und (9) aufweist.

2. Kontaktloser Positionssensor nach Anspruch 1 oder 2, **dadurch gekennzeichnet, dass** sich das besagte Detektionselement (3) in einer Ebene befindet, die in Bezug auf die Unterseite der Flusskollektoren (2a und 2b) axial verschoben ist.

3. Kontaktloser Positionssensor nach Anspruch 1, **dadurch gekennzeichnet, dass** sich die Magnetisierungsrichtung des Dauermagneten (1) linear verändert.

4. Kontaktloser Positionssensor nach Anspruch 1, **dadurch gekennzeichnet, dass** sich die Magnetisierungsrichtung des Dauermagneten (1) regelmäßig verändert.

5. Kontaktloser magnetischer Positionssensor nach Anspruch 1, **dadurch gekennzeichnet, dass** der Dauermagnet (1) im Wesentlichen zylindrisch ist.

6. Kontaktloser magnetischer Positionssensor nach Anspruch 1, **dadurch gekennzeichnet, dass** der Dauermagnet (1) im Wesentlichen parallelepipedförmig ist.

7. Kontaktloser magnetischer Positionssensor nach Anspruch 1, **dadurch gekennzeichnet, dass** die Flusskollektoren (2a, 2b) darüber hinaus einen Falzabschnitt aufweisen.

8. Kontaktloser magnetischer Positionssensor nach Anspruch 1, **dadurch gekennzeichnet, dass** er zwei Kollektorenpaare (2a, 2b und 2c, 2d) umfasst, wobei jedes Kollektorenpaar (2a, 2b und 2c, 2d) jeweils einen Spalt (7a und 7b) abgrenzt, wobei das Detektionselement (3) in gleicher Entfernung zu den vier Enden der Kollektoren (2a, 2b und 2c, 2d), welche besagte Spalte (7a, und 7b) abgrenzen, positioniert ist.

9. Kontaktloser magnetischer Winkelpositionssensor nach einem der Ansprüche 1 bis 7, **dadurch gekennzeichnet, dass** das Detektionselement (3) in der Lage ist, die Anzahl der Umdrehungen des Magneten absolut zu messen.

10. Kontaktloser magnetischer Winkelpositionssensor, der einen Sensor nach dem vorhergehenden Anspruch umfasst, **dadurch gekennzeichnet, dass** er mindestens ein zweites Detektionselement (5) umfasst, das in der Lage ist, die Winkelposition des Magneten (1) um 360° zu messen.

11. Kontaktloser magnetischer Winkelpositionssensor nach Anspruch 10, in dem das zweite Detektionselement (5) mit mindestens einem Flussdetektorenpaar (2e, 2f) verbunden ist, **dadurch gekennzeichnet,**
- **dass** jeder Flusskollektor (2e, 2f) mindestens einen mit einem Ende (10, 11) versehenen Abschnitt aufweist, der sich im Wesentlichen entlang der Verschiebungsrichtung des Magneten (1) erstreckt,
- **dass** die Enden (10, 11) des Flusskollektorenpaars (2e, 2f) einen Spalt (7c) abgrenzen, der entlang der Verschiebungsrichtung des Magneten (1) ausgerichtet ist;
- und das Detektionselement (3) außerhalb des besagten Spalts (7c) und im Wesentlichen in gleicher Entfernung zu den Enden (10, 11) positioniert ist.

12. Kontaktloser magnetischer Winkelpositionssensor nach Anspruch 10 und 11, **dadurch gekennzeichnet, dass** die Detektionselemente zu beiden Seiten einer Leiterplatte (4) positioniert sind.

13. Kontaktloser magnetischer Winkelpositionssensor nach Anspruch 11, **dadurch gekennzeichnet, dass** die Detektionselemente (3 und 5) koplanar sind.

## Claims

1. A contactless position sensor comprising at least one permanent magnet (1) emitting a magnetic field, at least one detection element (3) sensitive to the direction of the magnetic field and at least one pair of flux collectors (2a, 2b), with the permanent magnet (1) being adapted to move in a direction of displacement and having a continuously variable direction of magnetization along the direction of displacement, with each flux collector (2a, 2b) having at least one portion provided with one end (8, 9) which extends substantially along the direction of displacement of the magnet (1), with the ends (8, 9) of a pair of flux collectors (2a, 2b) defining a gap (7) oriented along the direction of displacement of the magnet (1)
**characterized in that** the detection element (3) is a detection element adapted to measure two radial BR and tangential BT magnetic induction components, at a single point positioned outside said gap (7) and in a position substantially equidistant from the ends (8) and (9).

2. A magnetic contactless position sensor according to claim 1, **characterized in that** said detection element (3) is located in a plane axially shifted relative to the inner face of the flux collectors (2a and 2b).

3. A magnetic contactless position sensor according to claim 1, **characterized in that** the direction of magnetization of the permanent magnet (1) varies linearly.

4. A magnetic contactless position sensor according to claim 1, **characterized in that** the direction of magnetization of the permanent magnet (1) varies periodically.

5. A magnetic contactless position sensor according to claim 1, **characterized in that** the permanent magnet (1) is substantially cylindrical.

6. A magnetic contactless position sensor according to claim 1, **characterized in that** the permanent magnet (1) is substantially a parallelepiped.

7. A magnetic contactless position sensor according to claim 1, **characterized in that** the flux collectors (2a, 2b) also have a folding portion.

8. A magnetic contactless position sensor according to claim 1, **characterized in that** it comprises two pairs of collectors (2a, 2b and 2c, 2d), with each pair of collectors (2a, 2b and 2c, 2d) defining a gap (7a and 7b) respectively, with the detection element (3) being positioned at an equal distance from the four ends of the collectors (2a, 2b and 2c, 2d) defining said gaps (7a and 7b).

9. A magnetic contactless angular position sensor according to one of claims 1 to 7, **characterized in that** the detection element (3) is adapted to keep an absolute count of the number of revolutions of the magnet.

10. A magnetic contactless angular position sensor including a sensor according to the preceding claim, **characterized in that** it comprises at least one second detection element (5) adapted to measure the angular position of the magnet (1) over 360°.

11. A magnetic contactless angular position sensor according to claim 10, wherein the second detection element (5) is associated with at least one pair of flux detectors (2e, 2f), **characterized in that**:
- each flux collector (2e, 2f) has at least one portion provided with one end (10, 11) which extends substantially along the direction of displacement of the magnet (1),
- the ends (10, 11) of the pair of flux collectors (2e, 2f) define a gap (7c) oriented along the direction of displacement of the magnet (1);
- and the detection element (3) is positioned outside said gap (7c) and substantially at an equal distance from the ends (10, 11).

12. A magnetic contactless angular position sensor according to claim 10 or 11, **characterized in that** the detection elements are positioned on either side of a printed circuit (4).

13. A magnetic contactless angular position sensor according to claim 11, **characterized in that** the detection elements (3 and 5) are coplanar.
